# EUROPEAN PATENT SPECIFICATION

(11) **EP 0 306 036 B1**
(45) Date of publication and mention of the grant of the patent: **24.03.1993**
(21) Application number: 88114343.2
(22) Date of filing: 02.09.1988
(51) Int. Cl.: B23K 28/02, B23K 11/02, B23K 26/00

(54) **A high-power-density beam welding method in combination with upset welding and apparatus therefor**
Schweissverfahren mit einem Energiestrahl hoher Leistungsdichte in Verbindung mit einem Widerstandsstumpf-Schweissverfahren und Vorrichtung hierzu
Procédé de soudage par rayon à haute puissance volumique avec soudage en bout par résistance et appareil à cet effet

(30) Priority: 04.09.1987 JP 221562/87; 08.08.1988 JP 197697/88
(43) Date of publication of application: 08.03.1989
(73) Proprietor: NIPPON STEEL CORPORATION, Tokyo 100 (JP)
(72) Inventor: Miyazaki, Yasunobu c/o Nippon Steel Corporation, Sagamihara-shi Kanagawa-ken (JP); Saito, Tohru c/o Nippon Steel Corporation, Sagamihara-shi Kanagawa-ken (JP); Nakamura, Taizo c/o Nippon Steel Corporation, 5-10-1, Fuchinobe (SA)
(74) Representative: VOSSIUS & PARTNER

(56) References cited:
- EP-A- 0 192 921
- EP-A- 0 248 143
- DE-A- 3 600 452

## Description

The present invention relates to a high-power-density beam welding in combination with upset welding for metal plates, sheets and wires, or their formed or machined articles, and an apparatus therefor.

Conventionally, the upset resistance welding methods such as upset welding and flash welding, or high-power-density beam welding methods using laser, electron beam, etc. have been often used to join metal plates, sheets and wires or their formed or machined articles, especially those of relatively small thickness or diameter.

The upset welding method comprises clamping two parts to be welded to each other on a fixed electrode and a movable electrode respectively, advancing the movable electrode toward the fixed electrode to upset the abutting edges of the parts against each other, and supplying an electric current to the parts while giving a predetermined upsetting pressure onto the abutting edges thereof, to heat the parts with the heat produced therein by the resistances of the parts and the contact resistances of the abutting faces thereof, so as to produce plastic deformations in the parts and weld the parts to each other.

The flash welding method is performed in the same welding steps and with the same arrangement of the above-described upset welding method, except that flashes are produced between the parts during the welding process to assure heating with higher efficiency.

These resistance welding methods present great merits in economy such as elimination of filler metal, a high efficiency due to a short welding time, and non-requirement of high accuracy in machining abutting edges of the parts to be joined.

In addition, these methods present the advantage that the entire area of abutting surface of the parts are joined to each other simultaneously, so that distortions due to the temperature gradient of the weld are smaller than those caused in the arc or beam welding where the edges of the parts are welded to each other along the weld line sequentially by starting from one extremity thereof to the other.

For comparison between the flash welding and the upset welding, the former is feasible even if the edge machining is rougher, while the latter is more suited for automation of a welding line which requires a clean working environment, because it produces no flash during the welding process.

Upset welding methods are described, for example, in the JP-A-61-38787 and JP-A-61-38788.

The high-power-density beam welding method comprises parts irradiating a laser beam or high-power-density electron beam onto abutting edges of parts to be joined to fuse and weld the abutting edges. This welding method has been widely practised, because it presents great technical and economical merits that the use of a concentrated heat source with high energy density results in narrower heated and fused areas of the parts members and narrower areas of the parts in which the material properties are changed and geometrical deformation is caused.

Despite the above advantages, the upset welding methods present the following disadvantages:
(1) They require a high electric power for heating and a high mechanical force for welding pressure;
(2) Excess metal formed in interfaces of the abutting edges must be trimmed after welding. The trimming requires an additional step and results in an increased number of step as well as increased losses of welding materials with only a lowered yield;
(3) Defects such as oxide slag and insufficient heat and defects due to the upsetting pressure are liable to be left in joined interfaces, especially in the welded edge portions of the parts. Since there is no applicable non-destructive inspection method for these defects, the consistency of product quality must be assured by relying on a random sampling destructive inspection. Therefore, the quality guarantee cost is increased for products which require a high reliability.

Meanwhile, the high-power-density beam welding method present the following disadvantages:
(1) The use of a concentrated heat source requires a high accuracy of work piece alignment and consequently much labor for edge preparation. To solve these problems, a method wherein a preliminary welding is performed before the main welding by irradiation of high-power-density beam is disclosed in the JP-A-57-160582.
(2) The quick heating and quick cooling of welding objects lead to excessive hardening and undesirable changes in material properties.
(3) Any shortage of weld metal tends to produce defects in the weld bead form, such as lack of weld metal produced in the edge portions of welding parts at the finishing points of welding as well as undercuts and collapses in weld sections, which cannot be repaired after the completion of welding, or may adversely affect the mechanical strength of welded objects.

JP-A-57-202985 discloses an electric welding method wherein an electrical contact is effected by laser irradiation first and then the Joule heating is caused by electric conduction. This method is intended to weld two materials remarkably different in their heat capacity.

EP-A-0,248,143 discloses a method and an apparatus for connecting metal strips by means of flash welding or laser welding. It does, however, not disclose a combined operation of these two welding methods.

An object of the present invention is not merely to combine the two above-described welding methods for the purpose of offsetting the disadvantages of the two methods with each other, or compensate the disadvantages of the one method with the advantages of the other, but to provide a truly new welding method.

This object is solved with the features of the claims.

The present invention will be described in more details with reference to the accompanying drawings.

Fig. 1 is a perspective view showing an embodiment of system configuration according to the present invention.

Fig. 2 is a time chart showing the electric conduction timing to mitigate the quick heating or cooling of welding objects.

Fig. 3 shows an apparatus according to the present invention.

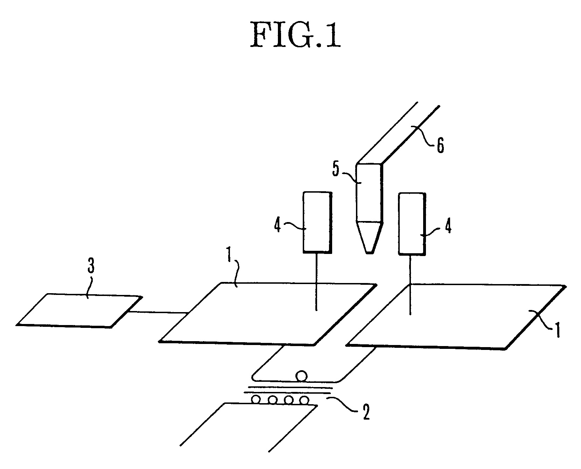

Fig. 1 shows the basical configuration of an upset welding system as an embodiment of the present invention. 1 is a cut plate. 3 is a hydraulic cylinder to give an upsetting force onto the cut plates 1 for butting against each other. 4 is a hydraulic cylinder used to clamp the cut plate 1. 5 is a nozzle to irradiate a carbon dioxide laser beam. This nozzle may also jet an argon or helium gas for processing. 6 is a guide to be used for moving the laser beam along the upset interface, that is, a laser beam transfer tube. 2 is a power transformer to supply an electric current to the plates 1. This transformer is operated during the pressure as well as before, during and after the irradiation of the laser beam.

While the cut plates 1 are conductive during the upset welding, they are heated and softened by the resistance heat produced in the upset parts of the plates 1. The pressure gives plastic deformations in the abutting surfaces of the plates 1 by pressing the heated abutting surfaces thereof against each other so as to provide a good fitting of the abutting surfaces and form a small excess metal. Thus, the gapless upset ends of the plates 1 are obtained, and the small excess metal serves as the substitute of welding materials when a high-power-density beam is irradiated. Therefore, the thickness of the plates 1 to be fused by the irradiation of the high-power-density beam is the original thickness of each plate 1 plus the height of the excess metal formed by the preliminary upset welding. The height of the excess metal depends upon the upset welding current and pressure. Therefore, the output of the high-power density beam must depend upon the pressure and the heat input provided by the Joule heating during the preliminary upset welding. And the irradiation of the high-power-density beam fuses the incomplete abutting surfaces provided by the preliminary upset welding, and welds the surfaces of the plates 1 to each other completely.

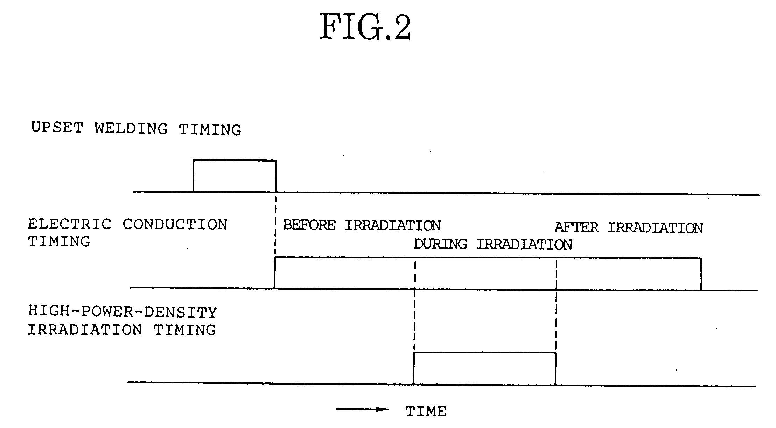

The electric current supplied to the plates 1 in one or more processes before, during and after the irradiation of the high-power-density beam after the upset welding produces heat in the abutting surfaces and the metallic materials to mitigate any quick heating or quick cooling of the plates 1 to be welded by the high-power-density beam, and consequently to prevent any excessive hardening of the weld. Fig. 2 shows an example of the electric current supply timing.

If the high-power-density beam is a laser beam, it is possible to blow argon gas or any other process gas onto the metallic materials in order to facilitate the fusion thereof. If the argon gas is used, a wide area of fusion is provided by the irradiation of the laser beam. If helium gas is used, the area of fusion is narrower than in case of argon gas. Whether argon or helium gas is used as process gas, or whether the mixture of these gas or any other gas is used has to be determined, considering the metallurgical characteristics of the welding objects, the form of the excess metal and the thickness of the plates 1.

This embodiment according to the present invention is a welding system comprising an upset welding machine and a carbon dioxide laser processing machine. However, it is also possible to install an upset welding machine and a laser processing machine separately so as to set and subject the preliminarily upset-welded materials to the fusion welding in the laser processing machine. After the preliminary upset welding, it is also possible to subject the materials to the fusion welding with electron beam.

An embodiment according to the present invention will be described below wherein JIS G3131 SPHC materials (30mm wide and 3.1mm thick) were subjected to an AC upset welding and a laser welding. In this embodiment, an upset welding machine and carbon dioxide laser processing machine were used.

The preliminary upset welding was performed under the conditions as shown in Table 1, while the laser irradiation conditions are as shown in Table 2. Table 1 shows that the mechanical force and electric power required for the preliminary upset welding are sufficiently smaller than for the ordinary upset welding, where the welding current of 170 Amp/mm² and the upsetting force of about 98.1 MPa (10kg/mm²) are required to provide an excellent performance of weld.

Table 3 shows the weld performance provided by the present invention in comparison with those by the conventional welding methods. Table 4 shows the welding efficiencies of these welding methods. These tables show that the welding method according to the present invention is superior to the conventional methods in many aspects.

**Table 1**

| Preliminary-upset welding conditions | | | |
|---|---|---|---|
| AC peak average current | Pressure | Resistance welding time | Upset length |
| 140 Amp/mm² | 49 MPa (5kg/mm²) | 20 | 1mm |
| Note: The resistance welding time is represented in AC cycles (50Hz). | | | |

**Table 2**

| Laser beam irradiation conditions | | |
|---|---|---|
| Laser output | Welding speed | Flow rate of process gas |
| 4.0 kwatt | 3.0m/min | He 15 liters/min |

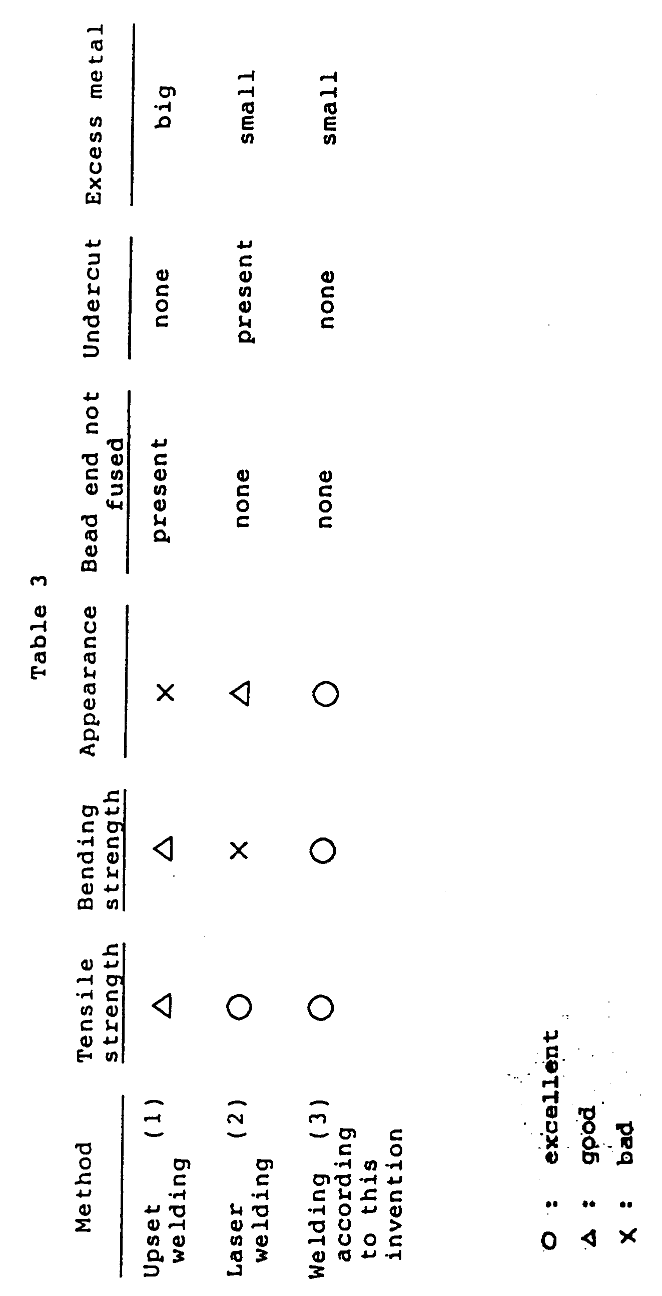

**Table 4**

| Method | Yield | Pre- & post-process time |
|---|---|---|
| Upset welding (1) | bad | long |
| Laser welding (2) | good | long |
| Welding according to this invention (3) | good | short |

Herein-below detailed description will be made on an upset welding apparatus according to the present invention.

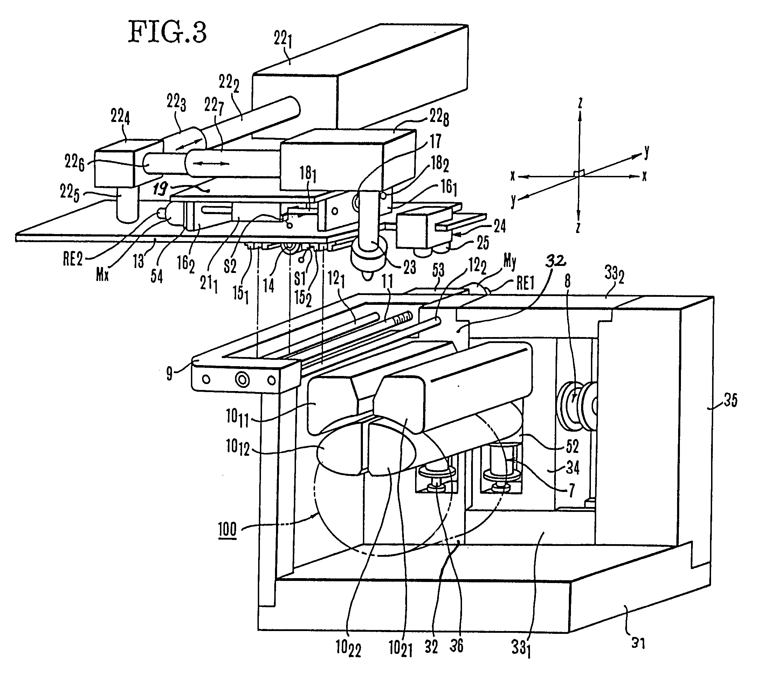

Fig. 3 shows the appearance of a mechanism part in an embodiment of the system according to the present invention. For easy understanding the mechanism for driving a laser torch 23 along a weld line is shown to be disassembled with a laser torch support 13 removed from a machine frame 9 and lifted.

A fixed support 32 and a support 35 are erectly fixed on a base 31 for the upset welding unit. Between the supports 32 and 35, guide beams 33₁ and 33₂ are horizontally placed and fixed on the supports 32 and 35. An electrode support block 34 is mounted on the guide beams 33₁ and 33₂ in such a way that it is freely movable in the x direction.

The end of a first electrode material 10₁₁ extending in the y direction is fixed on the fixed support 32. An electrode support block (not shown) is mounted on the fixed support 32 in such a way that it can be moved vertically (or in the z direction). A second electrode material 10₁₂ extending in the y direction is fixed on this electrode support block. A hydraulic cylinder 36 is inserted between this electrode support block and the fixed support 32. The upper chamber and lower chamber of the hydraulic cylinder 36, which are partitioned by a piston rod, are connected to a high-pressure line and a low-pressure line respectively so that when a piston is moved down to project the piston rod out of the cylinder, the second electrode material 10₁₂ can be moved up and strike against the first electrode material 10₁₁. If a wheel material 100 as upset welding object is then placed between the electrodes, it is pressed by and between the electrode materials 10₁₁ and 10₁₂.

A third electrode material 10₂₁ extending in the y direction is fixed on the electrode support block 34 through an insulating material. On the electrode support block 34, another electrode support block 52 is mounted in such a way that it can be moved vertically (or in the z direction). A fourth electrode material 10₂₂ is fixed on the electrode support block 52 through an insulating material. A hydraulic cylinder 7 is inserted between the electrode support block 52 and the electrode support block 34. The cylinder 7 is fixed on the block 52, while a piston rod is on the block 34. The upper and lower chambers of the hydraulic cylinder 7, which are partitioned by the piston rod, are connected to a high-pressure line and a low-pressure line respectively so that when a piston is moved down to project the piston rod out of the cylinder, the fourth electrode material 10₂₂ can be moved up and strike against the third electrode material 10₂₁. If a wheel material 100 as upset welding object is then placed between the electrodes, it is pressed by and between the electrode materials 10₂₁ and 10₂₂.

A hydraulic cylinder 8 is inserted between the electrode support block 34 and the support 35. The cylinder 8 is fixed on the block 34, while a piston rod is on the support 35. The left and right chambers of the hydraulic cylinder 8, which are partitioned by the piston rod, are connected to a high-pressure line and a low-pressure line respectively so that when a piston is moved right to project the piston rod out of the cylinder 8, the electrode support block 34 can be moved left to move the third and fourth electrode materials 10₂₁ and 10₂₂ to the left. If the end part of the wheel material 100 is pressed by and between the first and second electrode materials 10₁₁ and 10₁₂, while the other end part of the wheel material 100 is pressed by and between the third and fourth electrode materials 10₂₁ and 10₂₂, as described above, the end part of the wheel material 100 is butted against the other end part thereof with an upsetting force exerted on the end faces (abutting surfaces) of the two end parts. Pressed by the upsetting force, the abutting surfaces are resistance-welded to each other by applying an upset weld voltage to the first and third electrode materials 10₁₁ and 10₂₁. At the same time, the end faces are softened to form angular protrusions on the two end parts around the abutting surfaces. In other terms, the cross section including the weld line is in the form of M.

On the fixed support 32 is fixed a machine frame 9 in the form of **]** and extending in the y direction, by which a threaded rod 11 extending in the y direction is free rotatably supported and on which a guide bar 12₁ is fixed in parallel with the threaded rod. Between the fixed support 32 and the machine frame 9, another guide bar 12₂ is fixedly attached in parallel with the threaded rod 11. The end of the threaded rod 11 is connected to the output shaft of reduction gears 53 through the machine frame 9. The input shaft of the reduction gears 53 is connected to the rotary shaft of an electric motor My and a rotary encoder RE1. This rotary encoder RE1 generates an electric pulse per the predetermined angular rotation of the input shaft of the reduction gears 53.

As shown separately in Fig. 3, the threaded rod 11 is passed through and engaged with the threaded hole of a nut (female screw) fixedly on mounted on the laser torch support 13. Mounted fixedly the laser torch support 13, guide seats 15₁ and 15₂ having a concave section are connected to and supported by the guide bars 12₁ and 12₂. Therefore, when the motor My is normally rotated, the threaded rod 11 is normally rotated to move the laser torch support 13 forward (in the direction from the front side to the back side of the sheet on which Fig. 3 is shown). When the motor My is reversed, the threaded rod 11 is also reversed to move the laser torch support 13 backward (in the direction from the back side to the front side of the sheet on which Fig. 3 is shown). The laser torch support 13 is equipped with a limit switch S1. When the laser torch support 13 moving backward reaches close to the limit switch S1, the action element of the limit switch S1 strikes against the machine frame 9 to set the limit switch S1 into open state and consequently stop the energized motor My for reverse rotation (or backward movement).

On the laser torch support 13, a threaded rod 17 and guide bars 18₁ and 18₂ (18₂ not shown) designed similarly to the threaded rod 11 and the guide bars 12₁ and 12₂ respectively are placed in the x direction.

The threaded rod 17 is screwed in a nut (not shown) fixed on another laser torch support 19. Mounted fixedly on the laser torch support 19, guide seats 21₁ and 21₂ (21₂ not shown) having a concave section are connected to and supported by the guide bars 18₁ and 18₂. The output shaft of reduction gears 54 is connected to the end of the threaded rod 17, while the input shaft of the reduction gears 54 is connected to a motor Mx and a rotary encoder RE2. Therefore, when the motor Mx is normally rotated, the threaded rod 17 is also normally rotated to move the laser torch support 19 forward (or left) relative to the laser torch support 13. When the motor Mx is reversed, the threaded rod 17 is also reversed to move the laser torch support 19 backward (or right) relative to the laser torch support 13. The laser torch support 19 is also equipped with a limit switch S2. When the laser torch support 19 moving backward reaches close to the limit switch S2, the action element of the limit switch S2 strikes against the laser torch support 13 on which the threaded rods 11 and 17 are mounted. As the results, the limit switch S2 is set into open state to stop the energized motor Mx for reverse rotation (backward movement).

On the laser torch support 19 is mounted a mirror box 22₈ coupled with a laser torch 23. A beam duct 22₆ is inserted in a beam duct 22₇ fixed on the mirror box 22₈, the beam duct 22₆ is fixed on a mirror box 22₄, which is fixed on the laser torch support 13 through a support 22₅. Another beam duct 22₃ is fixed on the mirror box 22₄. A beam duct 22₂ for a laser emitting device 22₁ is inserted in the beam duct 22₃. The beam duct 22₇ can be moved forward and backward in the x direction relative to the beam duct 22₆. The beam duct 22₃ can be moved forward and backward in the y direction relative to the beam duct 22₂. The laser emitting device 22₁ is fixed on an on-floor support (not shown) separately from the above-described movable parts.

On the laser torch support 13 are mounted a TV camera 24 and a lighting lamp 25. Therefore, in this embodiment, the laser torch support 13 is moved only in the y direction relative to the machine frame 9 so that the TV camera 24 and the lighting lamp 25 are also moved only in the y direction, while the laser torch support 19 is moved both in the y and x directions relative to the machine frame 9 so that the laser torch 23 is also moved both in the y and x directions. The TV camera 24 and the lighting lamp 25 are placed just above the position deviated a little from the right sides of the electrode materials 10₁₁ and 10₁₂ to the right in the x direction, that is, the position where the weld line is formed in the expected upset welding process, and they are moved by the motor My from the x position in the y direction. At the same time, the laser torch 23 is also moved in the y direction, and it is moved further in the x direction when the motor Mx is driven. The laser torch 23 is driven in the x direction according to the x-direction deviation of the weld line so that it can always focus its irradiated laser beam on the center of the weld line width during its movement in the y direction.

It is understood that the apparatus according to the present invention can be used not only for the upset welding of wheel materials, but also for that of the end faces of plate, belt, band and other materials.

The present invention has the following effects to make a great contribution to industries:
1. The preliminary upset welding can provide the upset beveling between welding objects necessary for the laser welding, while only the laser welding requires a beveling machining process before the welding process. Thus, the welding method according to the present invention eliminates the beveling machining process and can use the laser beam welding.
2. Such defects that are liable to be produced by the upset welding in abutting surfaces can be harmlessly fused and agitated by the laser beam irradiation.
3. The excess metals formed in welds can be smaller than those provided by the upset welding, so that the post processes and the material losses are reduced with the yield increased and the marginal cost of processing decreased. In addition, the electric power and mechanical force requirements are not so high as in the upset welding.
4. The small excess metals formed by the preliminary upset welding serve as the substitutes of filler metal and can prevent the production of the bead form defects detrimental to the laser welding.
5. Such undesirable changes of welding objects in metallurgical characteristics that are liable to be caused by the excessively quick heating or cooling during the laser welding can be mitigated by the electric conduction, which can control the cooling rate.

## Claims

1. A high-power-density beam welding method in combination with upset welding, which comprises forming along abutting edges of metal materials (1) to be pre-welded a continuous weld line for high-power-density beam welding by using an upset welding, and welding said metal materials (1) by irradiation of a high-power-density beam along said weld line previously formed by upset pre-welding, wherein the output of said high-power-density beam is determined on the basis of an heat input produced by Joule heating in said metal materials (1) during said upset welding as well as a welding pressure given to said metal materials (1).

2. A high-power-density beam welding method in combination with upset welding according to Claim 1, wherein said metal materials are heated by supplying an electric current thereto before, during and/or after the irradiation of said high-power-density beam.

3. A high-power-density beam welding method in combination with upset welding according to Claim 1 or 2, wherein said high-power-density beam is a laser beam having a wave length within the range of far infrared rays.

4. A high-power-density beam welding method in combination with upset welding according to Claim 3, wherein argon or other gas is blown onto said metallic materials before the irradiation of said laser beam to facilitate the fusion of said metallic materials.

5. A high-power-density beam welding method in combination with upset welding according to Claim 1 or 2, wherein said high-power-density beam is an electron beam.

6. An upset welding unit comprising:
a) a first member (10₁₂) extending in a y direction to support a welding object (100);
b) a second member (10₁₁) extending in the y direction and facing said first member (10₁₂) in a z direction substantially perpendicular to said y direction;
c) first driving means for driving at least one of said first and second members (10₁₂ and 10₁₁) toward the other;
d) a third member (10₂₂) extending in the y direction and facing said first member in an x direction substantially perpendicular to said y and z directions;
e) a fourth member (10₂₁) extending in the y direction and facing said third member (10₂₂) in said z direction;
f) second driving means (7) for driving at least one of said third and fourth members (10₂₂ and 10₂₁) toward the other;
g) x moving and supporting means (8, 34, 52) for supporting and moving said third and fourth members (10₂₂ and 10₂₁) and said second driving means (7) freely;
h) third driving means for driving said x-direction moving and supporting means in the x direction;
i) a power supply device for powering said welding object (100) placed between at least one of said first and second members and at least one of said third and fourth members;
j) a beam irradiating means having a torch (23) oriented to the space between said first and third members (10₁₂ and 10₂₂, resp.); and
k) y sweeping and driving means (My) for sweeping and driving said torch (23) in the y direction;
characterized by
l) x driving means (Mx) for driving said torch (23) in the x direction;
m) position detecting means (24, 25) for detecting the x-direction position of the upset weld line between said first and third members; and
n) weld control means for energizing said first and second driving means, said third driving means and said power supply device in turn, energizing said y sweeping and driving means, energizing said x driving means according to the position detected by said position detecting means so as to move said torch along said upset weld line, and energizing said beam irradiating means in sequence.

7. The upset welding unit according to claim 6, characterized in that the beam irradiating means comprises a laser.

## Patentansprüche

1. Strahlschweißverfahren mit einem Energiestrahl hoher Leistungsdichte in Verbindung mit Widerstandsstumpfschweißen, das umfaßt: die Ausbildung einer durchgehenden Schweißnaht mittels Widerstands stumpfschweißen entlang Stoßkanten von vorzuverschweißenden Metallmaterialien (1) zur Schweißung mit einem Energiestrahl hoher Leistungsdichte und Schweißen der Metallmaterialien (1) durch einen Energiestrahl hoher Leistungsdichte entlang der Schweißnaht, die zuvor durch das Vorstumpfschweißen gebildet wurde, wobei die Leistung des Energiestrahls hoher Leistungsdichte sowohl auf der Basis eines durch Joule'sche Erwärmung erzeugten Wärmeeintrags in die Metallmaterialien (1) während des Stumpfschweißens als auch auf der Basis eines auf die Metallmaterialien (1) ausgeübten Schweißdrucks bestimmt wird.

2. Strahlschweißverfahren mit einem Energiestrahl hoher Leistungsdichte in Verbindung mit Widerstandsstumpfschweißen nach Anspruch 1, wobei die Metallmaterialien durch Einspeisen eines elektrischen Stroms in sie vor, während und/oder nach der Bestrahlung mit dem Energiestrahl hoher Leistungsdichte aufgeheizt werden.

3. Strahlschweißverfahren mit einem Energiestrahl hoher Leistungsdichte in Verbindung mit Widerstandsstumpfschweißen nach Anspruch 1 oder 2, wobei der Energiestrahl hoher Leistungsdichte ein Laserstrahl mit einer Wellenlänge innerhalb des Bereichs der fernen Infrarotstrahlen ist.

4. Strahlschweißverfahren mit einem Energiestrahl hoher Leistungsdichte in Verbindung mit Widerstandsstumpfschweißen nach Anspruch 3, wobei Argon oder ein anderes Gas vor der Bestrahlung mit dem Laserstrahl auf die metallischen Materialien geblasen wird, um das Schmelzen der metallischen Materialien zu erleichtern.

5. Strahlschweißverfahren mit einem Energiestrahl hoher Leistungsdichte in Verbindung mit Widerstandsstumpfschweißen nach Anspruch 1 oder 2, wobei der Energiestrahl hoher Leistungsdichte ein Elektronenstrahl ist.

6. Stumpfschweißvorrichtung mit:
a) einem ersten Teil (10₁₂), das sich in einer y-Richtung erstreckt, um ein Schweißobjekt (100) zu unterstützen;
b) einem zweiten Teil (10₁₁), das sich in der y-Richtung erstreckt und dem ersten Teil (10₁₂) in einer z-Richtung, die im wesentlichen senkrecht zu der y-Richtung ist, gegenüberliegt;
c) einer ersten Antriebsvorrichtung, um mindestens eines der ersten und zweiten Teile (10₁₂ und 10₁₁) gegen das andere zu bewegen;
d) einem dritten Teil (10₂₂), das sich in der y-Richtung erstreckt und dem ersten Teil in einer x-Richtung, die im wesentlichen senkrecht zu der y- und z-Richtung ist, gegenüberliegt;
e) einem vierten Teil (10₂₁), das sich in der y-Richtung erstreckt und dem dritten Teil in der z-Richtung gegenüberliegt;
f) einer zweiten Antriebsvorrichtung (7), um mindestens eines der dritten und vierten Teile (10₂₂ und 10₂₁) gegen das andere zu bewegen;
g) in x-Richtung beweglichen und unterstützenden Vorrichtungen (8, 34, 52) zum Unterstützen und freien Bewegen der dritten und vierten Teile (10₂₂ und 10₂₁) und der zweiten Antriebsvorrichtung (7);
h) dritten Antriebsvorrichtungen zum Antreiben der in x-Richtung beweglichen und unterstützenden Vorrichtung in der x-Richtung;
i) einer Energieversorgungseinrichtung zur Beaufschlagung des Schweißobjekts (100) mit Energie, das zwischen dem ersten und/oder dem zweiten Teil und zwischen dem dritten und/oder dem vierten Teil angeordnet ist;
j) einer Strahl-Bestrahlungsvorrichtung mit einer Brennervorrichtung (23), die zu dem Raum zwischen dem ersten und dem dritten Teil (10₁₂ bzw. 10₂₂) hin ausgerichtet ist; und
k) einer in y-Richtung hin- und herbewegenden Antriebsvorrichtung (My) zum Hin- und Herbewegen und Antreiben des Brenners (23) in der y-Richtung;
gekennzeichnet durch
l) eine x-Antriebsvorrichtung (Mx) zum Antrieb des Brenners (23) in der x-Richtung;
m) Positionsdetektionsvorrichtungen (24, 25) zur Detektion der x-Richtungsposition der Stumpfschweißnaht zwischen dem ersten und dem dritten Teil; und
n) eine Schweißsteuerungsvorrichtung zur abwechselnden Erregung der ersten und zweiten Antriebsvorrichtung, der dritten Antriebsvorrichtung und der Energieversorgungseinrichtung, zur Erregung der Antriebsvorrichtung für die y-Hin- und Herbewegung, zur Erregung der x-Richtungs-Antriebsvorrichtung, entsprechend der von der Positionsdetektions-Vorrichtung detektierten Position, um den Brenner entlang der Stumpfschweißnaht zu bewegen, und zur Erregung der Strahl-Bestrahlungsvorrichtung in dieser Reihenfolge.

7. Stumpfschweißvorrichtung nach Anspruch 6, dadurch gekennzeichnet, daß die Strahl-Bestrahlungsvorrichtung einen Laser aufweist.

## Revendications

1. Procédé de soudage par faisceau à haute densité énergétique en combinaison avec un soudage en bout, qui comprend la formation le long des bords en aboutement des matériaux métalliques (1) devant être pré-soudés d'une ligne de soudure continue pour soudage par faisceau à haute densité énergétique en utilisant un soudage en bout, et le soudage desdits matériaux métalliques (1) par irradiation d'un faisceau à haute densité énergétique le long de ladite ligne de soudure formée antérieurement par pré-soudage en bout, dans lequel la sortie dudit faisceau à haute densité énergétique est déterminée sur la base d'un apport de chaleur produit par chauffage par effet Joule dans lesdits matériaux métalliques (1) pendant ledit soudage en bout ainsi que d'une pression de soudage appliquée auxdits matériaux métalliques (1).

2. Procédé de soudage par faisceau à haute densité énergétique en combinaison avec un soudage en bout selon la revendication 1, dans lequel lesdits matériaux métalliques sont chauffés en leur fournissant un courant électrique avant, pendant et/ou après l'irradiation dudit faisceau à densité énergétique élevée.

3. Procédé de soudage par faisceau à haute densité énergétique en combinaison avec un soudage en bout selon la revendication 1 ou 2, dans lequel ledit faisceau à haute densité énergétique est un faisceau laser ayant une longueur d'onde comprise dans la gamme des rayons de l'infrarouge lointain.

4. Procédé de soudage par faisceau à haute densité énergétique en combinaison avec un soudage en bout selon la revendication 3, dans lequel de l'argon ou un autre gaz est projeté par soufflage sur lesdits matériaux métalliques avant l'irradiation dudit faisceau laser pour faciliter la fusion desdits matériaux métalliques.

5. Procédé de soudage par faisceau à haute densité énergétique en combinaison avec un soudage en bout selon la revendication 1 ou 2, dans lequel ledit faisceau à haute densité énergétique est un faisceau électronique.

6. Ensemble de soudage en bout comportant :
a) un premier élément (10₁₂) s'étendant dans une direction y pour supporter un objet à souder (100);
b) un second élément (10₁₁) s'étendant dans la direction y et en regard dudit premier élément (10₁₂) dans une direction z sensiblement perpendiculaire à ladite direction y;
c) un premier moyen d'entraînement pour entraîner au moins l'un desdits premier et second éléments (10₁₂ et 10₁₁) l'un vers l'autre;
d) un troisième élément (10₂₂) s'étendant dans la direction y et en regard dudit premier élément dans une direction x sensiblement perpendiculaire auxdites directions y et z;
e) un quatrième élément (10₂₁) s'étendant dans la direction y et en regard dudit troisième élément (10₂₂) dans ladite direction z;
f) un second moyen d'entraînement (7) pour entraîner au moins l'un desdits troisième et quatrième éléments (10₂₂ et 10₂₁) l'un vers l'autre;
g) un moyen de déplacement dans la direction x et de support (8, 34, 52) pour supporter et déplacer librement lesdits troisième et quatrième éléments (10₂₂ et 10₂₁) et ledit second moyen d'entraînement (7);
h) un troisième moyen d'entraînement pour entraîner ledit moyen d'entraînement dans la direction x et de support dans la direction x;
i) un dispositif d'alimentation pour alimenter ledit objet à souder (100) placé entre au moins l'un desdits premier et second éléments et au moins l'un desdits troisième et quatrième éléments;
j) un moyen d'irradiation par faisceau ayant un chalumeau (23) orienté vers l'espace séparant lesdits premier et troisième éléments (10₁₂ et 10₂₂, respectivement); et
k) un moyen de balayage et d'entraînement (M_{y}) dans la direction y pour balayer et entraîner ledit chalumeau (23) dans la direction y;
caractérisé par :
l) un moyen d'entraînement (Mₓ) dans la direction x pour entraîner ledit chalumeau (23) dans la direction x;
m) un moyen de détection de position (24, 25) pour détecter la position dans la direction x de la ligne de soudure en bout entre lesdits premier et troisième éléments; et
n) un moyen de commande de soudure pour mettre en marche lesdits premier et second moyens d'entraînement, ledit troisième moyen d'entraînement et ledit dispositif d'alimentation, tour à tour, pour mettre en marche ledit moyen de balayage et d'entraînement dans la direction y, pour mettre en marche ledit moyen d'entraînement dans la direction x en fonction de la position détectée par ledit moyen de détection de position de façon à déplacer ledit chalumeau le long de ladite ligne de soudure en bout et pour mettre en marche ledit moyen d'irradiation par faisceau, séquentiellement.

7. Ensemble de soudage en bout selon la revendication 6, caractérisé en ce que le moyen d'irradiation par faisceau comprend un laser.
